# EUROPEAN PATENT APPLICATION

(11) **EP 1 968 276 A2**
(43) Date of publication of application: **10.09.2008**
(21) Application number: 08004296.3
(22) Date of filing: 07.03.2008
(51) Int. Cl.: H04L 29/06

(54) **Automatic user matching in an online environment**

(30) Priority: 09.03.2007 US 716222
(71) Applicant: Gemini Mobile Technologies, Inc., San Mateo CA 94403 (US)
(72) Inventor: Norton, Joseph Wayne, Bunkyo, Tokyo 112-0022 (JP); O'Dowd, Thomas Patrick, Meguro-ku, Tokyo-to 152-0001 (JP); Ishida, Shoji, Kashiwa, Chiba 177-0843 (JP); Ogasawara, Gary Hayato, Foster City, CA 94404 (US); Kamakura, Takuya, Chiyoda-ku, Tokyo 102-0083 (JP)
(74) Representative: Patentanwälte Ruff, Wilhelm, Beier, Dauster & Partner

(57) **Abstract**

A subject user may be automatically matched to one or more other users in an online resource-limited environment. In one embodiment, a multi-user online environment is accessed using a resource-limited device operated by the subject user. A pool of candidates from the available online users may then be generated based on their proximity in the online environment to the subject user. The various candidates within this pool may then be ranked based on a comparison of user profile matching criteria. Candidates may then be selectively added to the subject user's interaction group, which in one embodiment represents the set of online users which will be "seen" or otherwise available to the subject user for possible interaction.

## Description

### CROSS REFERENCE TO RELATED APPLICATION

This application is a continuation-in-part of application Ser. No. 11/292,841, filed Dec. 1, 2005 and published as U.S. Publication No. 2007/001161, which claims priority to U.S. Provisional Patent Application No. 60/697,335, filed on Jul. 6, 2005.

### FIELD OF THE INVENTION

The present invention relates generally to automatically matching users based on proximity and user profile matching criteria and more particularly to automatically matching users in a resource-limited online environment.

### BACKGROUND OF THE INVENTION

Mobile communications have seen a dramatic increase in recent times with wireless carriers continually offering new services and content to their mobile subscribers, such as online gaming, Internet browsing, online shopping and social networking. Many of these activities are carried out using a mobile browser application executing on the mobile device.

While mobile devices (e.g., personal digital assistants (PDAs), cellular telephones, smartphones, etc.) have become more powerful and functional, their capabilities are still significantly limited and they lack the full functionality of traditional personal computers (PCs). As such, mobile devices tend to function in a resource-limited environment having much less memory and processing power than the PC-based systems to which users have grown accustomed. Moreover, mobile devices typically communicate over cellular networks which historically suffer from significant bandwidth and speed limitations. Mobile web browsing, for example, can be very tedious with web pages sometimes taking minutes to load, and even then with only a portion of the web pages being displayed due to the limited screen size of typical mobile devices. That is, the limited available area for displaying content to the user serves as a significant limitation on the overall user experience.

The recent innovations disclosed in the parent application hereto, having U.S. Publication No. 2007/001161, have effectively combated many of the drawbacks associated with experiencing online services and content using mobile devices. However, there are still many times when the limited capabilities of the mobile device prevent full rendering of a multi-user environment, including presenting the multitude of available online users. For example, in an online virtual gaming environment, the number of available players will often exceed the amount that can be reasonably displayed and/or monitored on a given mobile device. Heretofore, the only known approach to alleviating this issue has been the use of Real-time Transport Protocol (RTP) and/or Real-time Transport Control Protocol (RTCP) to perform statistical sampling of the various participants. However, this approach fails to take into account the relative proximity and/or compatibility of the users. Accordingly, there is a need for a way to provide automatic user matching based on proximity and user profile matching criteria in an otherwise resource-limited online environment.

### SUMMARY OF THE INVENTION

Disclosed and claimed herein is a method and server for user matching in an online environment. In one embodiment, a method includes performing a proximity user search based on a predetermined search parameter of a subject user, identifying a plurality of candidates based on the proximity user search, and ranking the plurality of candidates based on one or more profile matching criteria of the subject user. The method further includes matching, according to the ranking, at least some of the plurality of candidates to the subject user.

Other aspects, features, and techniques of the invention will be apparent to one skilled in the relevant art in view of the following description of the exemplary embodiments of the invention.

### BRIEF DESCRIPTION OF THE DRAWINGS

FIG. **1** illustrates a communication system in accordance with an embodiment of the invention;

FIGS. **2A-2B** illustrate a user device and corresponding software in accordance with an embodiment of the invention;

FIG. **3** illustrates an embodiment of an online environment/community services system;

FIG. **4** illustrates one embodiment of a representation of a portion of a 3D online environment that may be implemented using the online environment/community services system of FIG. **3**;

FIG. **5** illustrates an embodiment of the interaction between a user device and the online environment/community services system of FIG. **3**;

FIGS. **6-7** are graphical representations of virtual or real space in an online environment/community in accordance with an embodiment of the invention;

FIGS. **8A-8E** illustrate how users/players may be automatically matched based on proximity and user profile matching criteria according to one or more embodiments of the invention;

FIG. **9** illustrates how users/players may be automatically ungrouped/unmatched according to another embodiment of the invention; and

FIGS. **10A-10B** illustrate an online chat environment in which one embodiment of the invention may be implemented.

### DETAILED DESCRIPTION OF THE EXEMPLARY EMBODIMENTS

### Overview of the Disclosure

The present disclosure relates generally to online user interaction and particularly to automatically matching online users based on proximity and user profile data. While certain aspects of the discloser are described with reference to two-dimensional (2D) space, it should be appreciated that the following principles are equally applicable to a three-dimensional (3D) environment, as well as to n-dimensional applications, where n is an integer greater than 3 (i.e., nD). For example, a time dimension may be accounted for in a four-dimensional environment.

As will be described in more detail below, one aspect of the disclosure is to enable a subject user, who may be in a resource-limited situation, to interact with an optimized subset of other online users. To that end, in one embodiment a proximity user search, based on a predetermined search parameter, may be conducted to identify a pool of candidates.

Once the pool of candidates has been identified, the various candidates may then be ranked based on a comparison of user profile matching criteria such as age, gender, interests, habits, personality, etc. Based on their ranking, candidates may then be selectively added to the subject user's interaction group, which in one embodiment represents the set of online users which will be "seen" or otherwise available to the subject user for possible interaction. In another embodiment, the user profile matching may also considers "buddy" and/or "block" lists. For example, a user may establish a "buddy list" of preferred contacts and/or a "block list" of users that the user would prefer to avoid. Candidates on the user's buddy list may be highly favored, while candidates on a "block list" may be highly disfavored. Additional details, aspects and features are in the following description of the exemplary embodiments of the invention.

The term "user" as used herein may refer to a particular individual or may refer to one or more "personalities" or "players" created by (or otherwise associated with) that individual. Each online persona may be visually represented by a so-called "avatar," which refers to the user's visual representation of himself or herself, typically in the form of a two-dimensional icon. In addition, personalities (aka players) may be unique to a given "instance" of an online environment, or may alternatively move between different instances. As such, it should be understood that references to users shall include, when appropriate, such users' online personas.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive. Reference throughout this document to "one embodiment", "certain embodiments", "an embodiment" or similar term means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner on one or more embodiments without limitation.

In accordance with the practices of persons skilled in the art of computer programming, the invention is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the invention are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, a fiber optic medium, a radio frequency (RF) link, etc. Overview of an Exemplary Online Environment

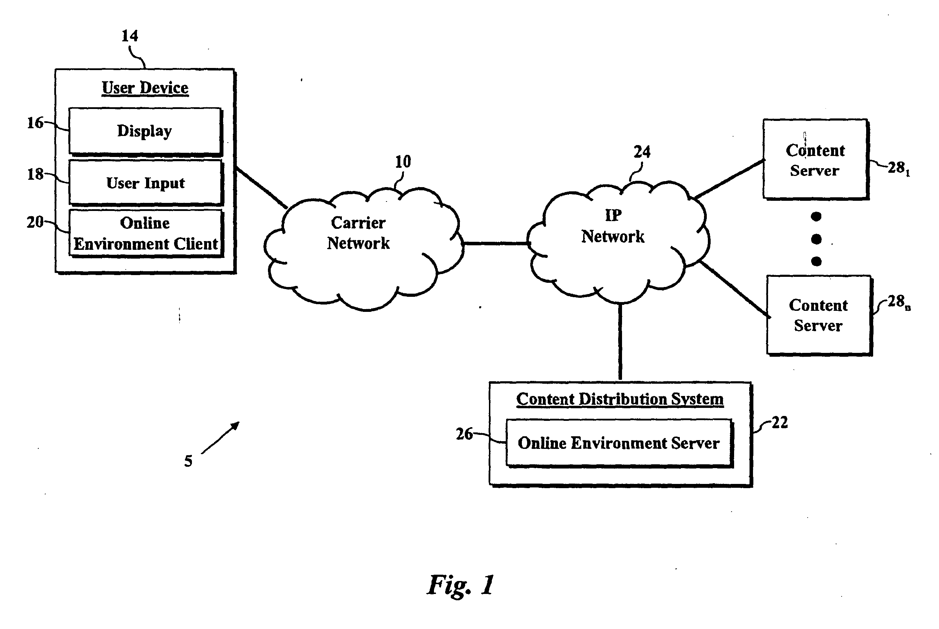

FIG. **1** depicts a communication system **5** in which one or more aspects of the invention may be implemented. In particular, communication system **5** is depicted as including a carrier network **10** which provides wireless communications services to at least one user device **14.** The carrier network 10 supports at least one wireless communications protocol such as Global System for Mobile communications (GSM), General Packet Radio Service (GPRS), Code Division Multiple Access (CDMA) or Wideband CDMA (WCDMA). The user device **14** may be any electronic device adapted to communicate with the carrier network 10, such as a cellular telephone, smartphone, personal digital assistant (PDA), handheld computer, etc.

The user device **14** includes a display **16**, a user input **18** and an online environment client **20,** which in one embodiment comprises one or more software modules executable by a processor (not shown) of the user device **14.** While in one embodiment, the display **16** may be a liquid crystal display (LCD), it should equally be appreciated that any other type of display consistent with the principles of the invention may be used. The user input **18** may include one or more buttons or keys in the form of a keypad, number pad, keyboard or any other collection of individual keys, buttons or the like. In another embodiment, the user input **18** may be integrated with the display **16** in the form of a touch screen. In a typical embodiment, the user device **14** will be a resource-limited device, with limited processing and/or data storage capabilities.

In operation, the online environment client **20** facilitates the display of a graphical user interface (GUI) on the display **16** through which a user may experience online content, environments and/or services. In one embodiment, the online environment client **20** may be a 3 DGUI client as detailed in previously-incorporated U.S. Publication No. 2007/001161 (hereinafter "Pub. No. '161"). It should further be appreciated that the online environment client **20** may be used as or otherwise incorporated with an operating system interface, an application interface, a web browser interface or an interface to other environments in which there is user interaction. It should further be appreciated that, while reference will be made to the system disclosed in Pub. No. '161, the principles of the invention are not intended to be limited to such system, and numerous other systems, platforms and architectures would be consistent with and included within the scope of the present disclosure.

In certain embodiments, the online environment client **20** may be adapted to enable a user to request content from a content distribution system **22,** which is connected to the carrier network **10** through an Internet Protocol (IP) network **24** (e.g., the Internet). In certain embodiments, the content may be multimedia content (e.g., music, video, images, etc.), while in other embodiments the requested content may relate to an online environment (virtual or real) which a user may navigate through and visually experience. To that end, in one embodiment the content distribution system **22** may include an online environment server **26** that provides the content for generation of the graphical representation of the online environment on the display **16** of the user device **14.** In certain embodiments, the online environment server **26** may access one or more content servers **28,-28ₙ** connected to the IP network **24** in connection with providing content (environment related or otherwise) and/or services to the user device **14.**

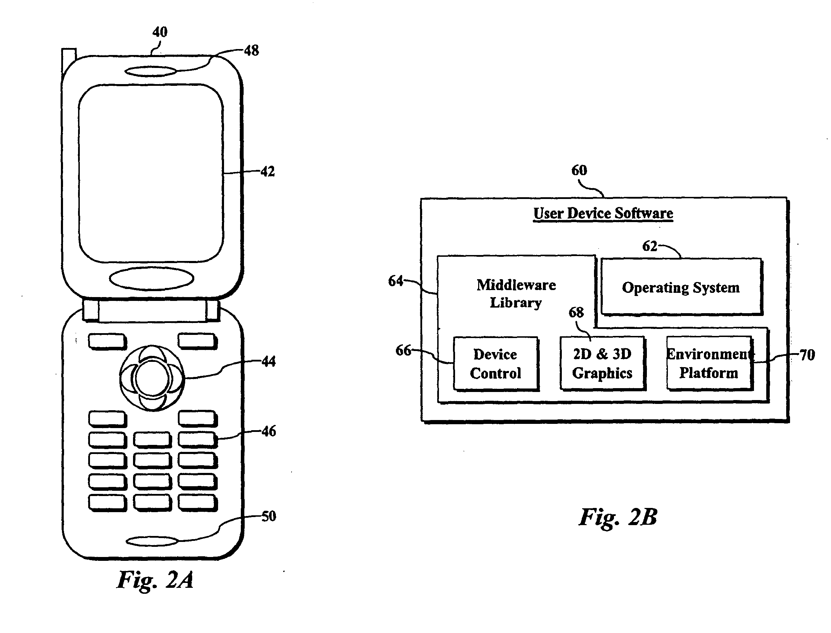

Referring now to FIG. 2A, depicted is one embodiment of a user device **14** of FIG.1. In this embodiment, the user device is a mobile phone 40 and includes a display **42,** a directional input **44,** a keypad **46,** a speaker **48** and a microphone **50.** It should of course be appreciated that mobile phone **40** is a non-limiting example of one possible user device.

The mobile phone **40** further includes a processor for executing certain software, such as the user device software **60** of FIG. 2B. As shown in FIG. 2B, user device software **60** may include an operating system **62** and a middleware library **64.** It will be appreciated that the client software **60** may be implemented as software, hardware or a combination thereof, and may incorporate alternative programming and operating environments. It should further be appreciated that the mobile phone **40,** like typical cellular telephones, may be a resource-limited device with limited processing and/or data storage capabilities.

The middleware library **64** includes device control functions **66,** 2D and/or 3D graphics APIs **68,** and functions to facilitate a virtual environment platform **70.** The device control functions **66** may include key sense operations, display control (e.g., backlight LCD blinking), vibration control, music and sound control and other device-specific control functions. The graphics APIs **68** may include 2D and/or 3D graphics functions including basic primitive handling, rendering, texturing and materials functions, translation, rotation and scaling of 2D and/or 3D objects and animation. In an exemplary embodiment, the graphics APIs **68** include functions for lighting effects including Gouraud shading, environmental lighting, environmental mapping (specular light) and tune shading. Standard graphics APIs may be used such as APIs defined in the OpenGL standard. The virtual environment platform **70** may include APIs for implementing the online environment GUI described herein, including functions for building and managing cells, reactors and actors, displaying cells and walkthrough interactivity as described in Pub. No '161.

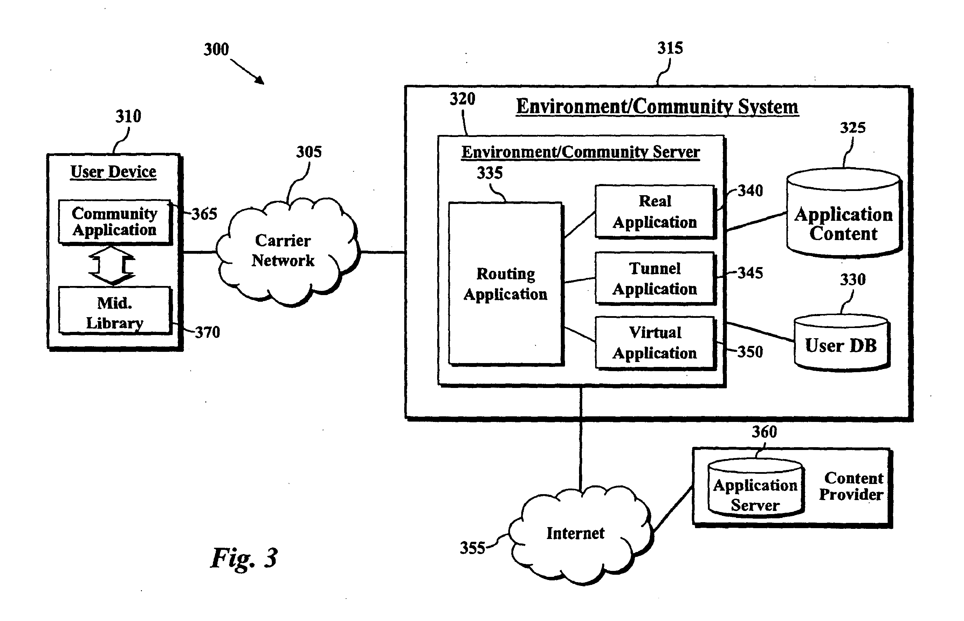

One embodiment of an online environment in which the invention may be implemented will now be described with reference to FIG. 3. Online environments (or worlds) may be used to connect people through social networking services such as dating services, blogs, instant messaging, mail and online events. Some online environments include virtual communities allowing a user to play the part of a character(s) in a virtual world, play games against other people on the network and participate in other virtual services. Users may create one or more online "personalities" or "players" whose avatars are visually perceptible to others accessing the online environment. In addition, such players may be unique to a given "instance" of the online environment, or may alternatively move between different instances.

To that end, FIG. 3 depicts a communication system **300** in which online community services may be provided to subscribers of the carrier network **305,** such as user device **310.** The communication system **300** includes an online environment/community system **315,** which includes an online environment/community server 320, an application content server **325** and a user database **330.** In one embodiment, the online environment/community server **320** is a 3 DGUI content server, as disclosed in Pub. No. '161, which may include one or more of a routing application **335**, a real application **340,** a tunnel application **345** and a virtual application **350.** In one embodiment, the real application **340** may provide real-world services to the user device **310** such as a dating service, mapping service and news delivery. The virtual application **350** may provide content representative of a virtual community to the user device **310.** Virtual services may include games and 3D virtual environments that the user may explore. In addition, the tunnel application **345** may be used to facilitate movement between the real and virtual worlds. In certain embodiments, the online environment/community server **320** may interface with the Internet 355 providing access to third-party content from one or more content providers **360.**

Continuing to refer to FIG. 3, the user device **310** includes an online environment/community application **365** that interfaces with the middleware libraries **370** (e.g., middleware library **64** in FIG. 2B). In one embodiment, the user device **310** is adapted to retrieve community data and content from the online environment/community server **320** and provide the user with online environment/community services through the online environment/community application **370** (e.g., 3 DGUI platform disclosed in Pub. No. '161).

In one embodiment, the online environment/community server **320** pushes certain content to the user device **310** through space-time pushing, psychological profile pushing and/or cell plan synchronized pushing. To facilitate pushing, the online environment/community server **320** may be interfaced with a push proxy gateway which routes incoming data to a Short Message Service Center (SMSC) for text messaging, or a Cell Broadcast Service Center (CBSC) for broadcast messages such as advertisements including graphics, text, sound and link data. The interface may be facilitated over the Session Initiation Protocol (SIP) or Push Access Protocol (PAP). The online environment/community server **320** may so interface with a multimedia messaging service center (MMSC) via the MM7 protocol for delivery of multimedia content to the user device **310.** As with the community server disclosed in Pub. No. '161, the online environment/community server 320 may also be connected to an HTTP proxy to facilitate data exchange using any known packet-based protocols.

Location-based information services may also be provided by the online environment/community server 320 using location information provided by the carrier network **305** regarding the user device **310**. To accomplish this, the online environment/community server 320 may be interfaced with carrier network databases, including a home location register (HLR), a location server via a multilink PPP (MLP) interface, and/or a provisioning server via a Lightweight Directory Access Protocol (LDAP) interface.

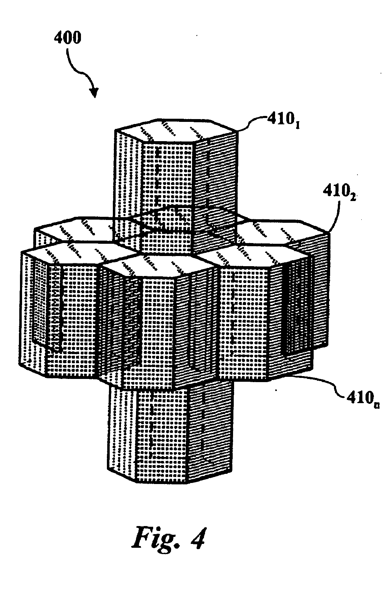

Referring now to FIG. 4, depicted is a representation of a portion of a 3D online environment. As shown, plurality of cells 410, -410. ("410") may be linked together forming a cluster of adjacent cells 400. Each cell 410 may be linked to one or more adjacent cells. Any surface of a given cell 410 may be configured to link to a surface of a another adjacent cell 410. In operation, a user may navigate through the three-dimensional geographic space defined by the cluster 400. In another embodiment, the cell cluster 400 may instead be a 2D environment. It should further be appreciated that the cluster 400 may also be linked to one or more other clusters (not shown). The user may be presented with various views to assist in user navigation through clusters of cells, where the exterior of each cell may include a graphical representation of the cell's type or contents or alternatively, the exterior surfaces may provide a window into the contents of the cell.

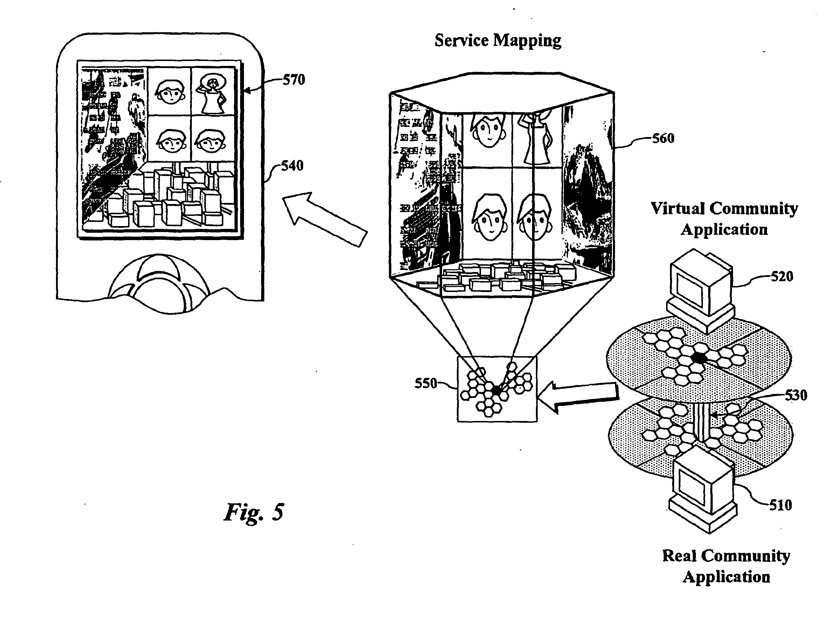

Referring now to FIG. 5, depicted is a relational representation of a real environment/community server 510 (e.g., real application 340 in FIG. 3) and a virtual environment/community server 520 (e.g., virtual application 350 in FIG. 3). A user may transition from one environment to another via tunnel 530. In one embodiment, the online environment/community server 510 and 520 may respond to a requesting user device 540 with service-map and link-data 550. The environment data stored in the community server(s) may be formatted as Hypertext Markup Language (HTML), Wireless Markup Language (WML) or any other standard format. The retrieved environment data may then be provided to a GUI library in a middleware library (e.g., middleware library 64 in FIG. 2B) of the user device for generation and display of the particular cell 560.

The 2D or 3D-rendering of the community data may then be processed by the user device 540 and presented to the user on display 570. If the parser of a conventional web browser is used, then the community data may be drawn as a web page in the usual 2D-rendering manner. As previously mentioned, to process the community data, the middleware library may include community APIs providing space-time driven content service and a profile-driven content service, and 2D/3D graphics features facilitating walkthrough environment/community operation, such as the operations described in Pub. No. '161.

In certain embodiments, a cell-based virtual environment/community may provide the various interactive services and support the navigation and story making. Alternatively, a cell-based real environment/community (or instance thereof) may provide real services such as navigation services, dating services, news services and shopping services. Various community spaces are browsed by walkthrough operation, and various interactive events may occur inside the space.

To that end, the real environment/community may be driven by real space-time such as local time, GPS position, cell position or service area of the carrier network (e.g., carrier network 305 in FIG. 3). The content available in the real environment/community may be correspondingly linked to the real space-time and provided to the user within the real environment/community in accordance with the real space-time. Such content may include local maps, identity of those within the vicinity, local news and local services such as restaurants.

In contrast, the virtual environment/community may be driven by a virtual space-time which is set by each application of an "instance" of a virtual environment/community. By way of example, a user may first execute an online environment client (e.g., browser application, 3 DGUI, etc.) on the user device 570. The online environment client retrieves the content for the first cell (e.g., cell 560) from the content distribution system (e.g., real or virtual environment/community servers 510 and 520). This content is then provided to a space builder application which constructs the cell 560 and provides an initial view for the display 570. The user (through their online persona or avatar) interacts with the display 570 using the user device to navigate the contents of the cell 560 and select links for further browsing of other cells, web pages or online resources generally.

### Exemplary Embodiment for Automatic User Matching

What has been described above is an exemplary environment in which the invention may be implemented. As previously mentioned, the user device with which the online environment/community is accessed may be a resource-limited device, having limited processing and/or data storage capabilities. Examples of such user devices may include cellular telephones, smartphones, PDAs, handheld computers, or the like. In a multi-user environment or community, for example, such a device may not be able to properly render a complex map and/or properly present all of the other available users/players with which a subject user may want to interact. As such, it may be desirable to enable a user to interact with an optimized subset of the other users/players in a gaming application, social networking application, or the like. To that end, one embodiment of the invention is to automatically identify a proximately-located subset of users (or their online personas) that may be available to or "seen" by the subject user. In certain embodiments, the individual users within this subset may then be ranked and matched to the subject user based on a comparison of user profile data. In this fashion, a subject user may be able to interact with the most proximate and compatible users available at a given time despite being in a resource-limited situation.

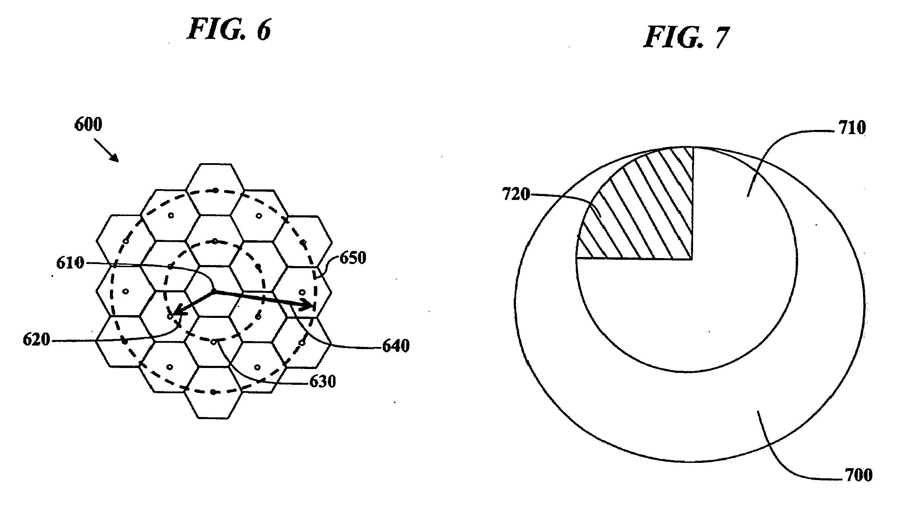

With reference to FIG. 6, depicted is a graphical representation of virtual or real space in an online environment/community in accordance with an embodiment of the invention. In particular, area 600 is an area defined around a subject user 610, for a particular environment instance, which may be searched in order to identify available users in proximity to the subject user **610.** In other embodiments, the area **600** may equally be a 3D volume of space around the user **610.** In still other embodiments, area **600** may correspond to n-dimensions, where n is an integer greater than 3. For example, a four-dimensional environment may further taken into account time. In either case, the area **600** is defined by a predetermined search parameter. Moreover, while area **600** is represented as a plurality of cells, it should equally be appreciated that other spatial representations may be used in accordance with the principles of the invention.

When the predetermined search parameter is equal to radius **620,** the cells within area **630** may be used to define the scope of the proximity user search. Thus, for a predetermined search parameter equal to radius **620,** the number of cells to be searched equals 7. However, when the predetermined search parameter is increased to radius **640,** the number of cells to be searched correspondingly increases to 19. In this fashion, the resolution of the search for proximately-located users may be specified. In one embodiment, this search result may generate a set of available online users/players that are in proximity to the subject user (or one of their online personas). It should further be appreciated that the predetermined search parameter may be based on the type of user device, the available device resources, user preference data, user directionality and/or context-specific data. With respect to user directionality, in certain embodiments the search area in front of the subject user's online persona/avatar may be larger than the search area behind the subject user's avatar. Context-specific data would include, for example, when the subject user is engaged in an activity (e.g., chat), the search radius may be smaller than if the subject is simply moving through the online environment.

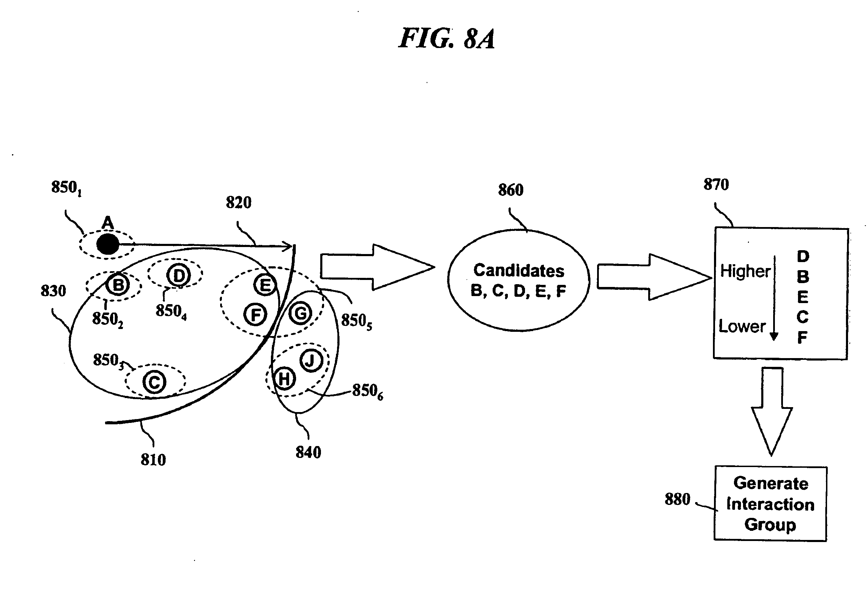

Referring now to FIG. 7, depicted is a graphical representation of how a subset of the available online users/players may be generated in accordance with one embodiment of the invention. As shown, set **700** represents the set of available online users/players that are in proximity to the subject user. In one embodiment, set 700 may be the result of the proximity user search described above with reference to FIG. 6. In any event, from set **700** a subset of candidates **710** may be defined as those users who are staying (at least temporarily) within proximity to the subject user (e.g., within area 600 of FIG. 6). In one embodiment, a maximum number of candidates **710** may be defined, for example, based on the type of user device, the available device resources, user preference data, user directionality and/or context-specific data. In another embodiment, candidates **710** are ranked (see FIGS. 8A-8E below) before consideration of the maximum allowable group members.

As will be described in more detail below with reference to FIGS. 8A-8E, the pool of candidates **710** may then be ranked to identify the optimal group of matching users **720.** In one embodiment, the matching users **720** may be composed of both unmatched users (e.g., users not currently in a defined group), as well as matched users who are not in an otherwise full group. In another embodiment, each user group may include a parameter defining the maximum number of group members.

Referring now to FIG. 8A, depicted is one embodiment of how online users may be automatically matched or grouped based on proximity and user profile matching criteria in accordance with one or more embodiments of the invention. While the embodiment of FIG. 8A is depicted in 2D space, it should be appreciated that the following principles are equally applicable to 3D, as well as to nD contexts. In this embodiment, subject user A, being in a resource-limited situation, desires to interact with an optimized subset of available users. As such, subject user A performs a proximity user search with a search parameter radius **820.** In one embodiment, radius **820** may be based on type of user device, the available device resources, user preference data, etc. It should further be appreciated that the proximity user search may be manually executed by the user or automatically by the device (e.g., user device software 60 of FIG. 2B) or on the server-side (e.g., online environment/community server 320 of FIG. 3). Regardless, user A's proximity search yields a user set **830** of available proximate users B, C, D, E and F. Note that, had radius **820** been a larger value, user set **840** may have been included in user set **830.**

Continuing to refer to FIG. 8A, it should further be noted that user set **830** may include users that have already been matched (e.g., users E and F) or not (e.g., users B, C and D). Users which have been previously matched as said to form an "interaction group" with each other (e.g., interaction group **8506**). In addition, user set **830** need not include all users within a prescribed interaction group (e.g., group **8505**). Users A, B, C and D have not been matched to anyone and, as such, are each depicted as being in single-member interaction groups **820**₁, **820**₂, **820**₃ and **820**₄, respectively, while users H and J have been matched and comprise interaction group **820**₆.

Once the user set **830** of proximate users has been determined, the user set **830** may be processed in order to determine the candidates **860** that will be considered for possible matching to the subject user A. While in the present embodiment, the user set **830** and the candidates **860** include the same users, in another embodiment the candidates **860** may be a subset of user set **830** (e.g., where user set **830** exceeds a maximum number of candidates).

Continuing to refer to FIG. 8A, another aspect of the invention is to generate a candidate ranking **870** from the available candidates **860.** In one embodiment, the candidate ranking 870 is based on a comparison of user profile matching criteria such as age, gender, interests, habits, personality, buddy lists, block lists, historical interactions with specific candidates, education level, blood type, appearances, marital status, children, dreams, birthdates, etc. Additionally, user-defined categories may be used to automatically include or exclude users. By way of a non-limiting example, subject user A may target known users (e.g., users on a watch list, buddy list, family member, etc.). In contrast, proximate users who are otherwise on a "blocked" list may be specifically excluded regardless of their ranking.

In one embodiment, the operable profile matching criteria of the subject user A may be compared individually to those of each of the candidates **860.** The result will be a candidate ranking **870** which, in the embodiment of FIG. 8A, shows user D as being the highest ranking candidate and user F as the lowest ranking candidate.

In one embodiment, user rankings may be based on a cumulative score. For example, each criteria that matches between the subject user (i.e., user A) and a particular candidate (e.g., user D) may be afforded a particular value. The cumulative values for the various criteria compared may then be used to rank the given candidate in relation to the other candidates. Blocked users may receive an automatic score of zero, while known friends may automatically receive the maximum possible score, or close thereto.

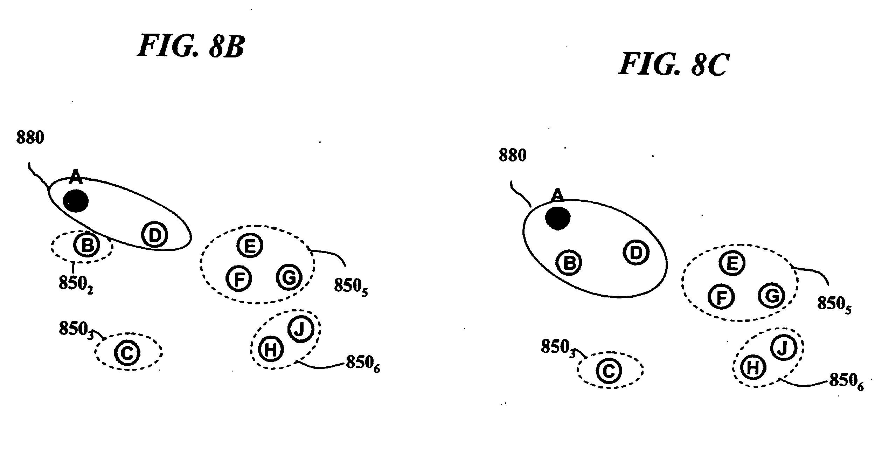

Once the candidates **860** have been ranked as described above, user A's interaction group **880** may be generated, which in one embodiment defines the group of online users with which user A will be able to interact. Stated differently, the interaction group **880** will contain those online users which user A will "see" as being available for interaction. Again, it should be appreciated that throughout this disclosure references to users is inclusive of their online personas and, as such, their online representations or avatars. Given the resource-limited contexts in which the invention may be implemented, in certain embodiments each user group (e.g., interaction group **880)** may include a parameter defining the maximum number of permitted members. This maximum may be based on, for example, the type of user device, the available device resources, user preference data, etc. To that end, FIGS. 8B-8E illustrate the sequence of how user A's interaction group **880** may be generated.

With reference to FIG. 8B, since user D was identified as the highest ranking candidate, he/she will be the first to be matched to user A forming a new interaction group **880.** Assuming that interaction group **880**'**s** member maximum has not been reached, the next ranked candidate may be considered for inclusion. Thereafter, FIG. 8C depicts user B, being the second highest ranking candidate, after being added to user A's interaction group **880.**

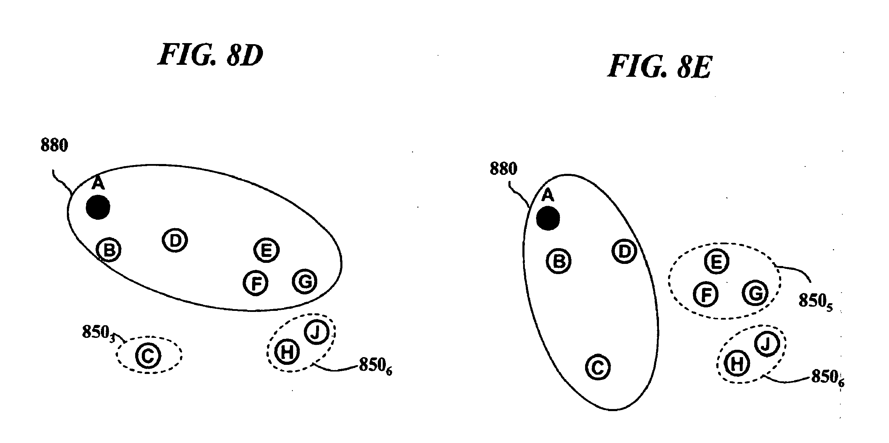

The next user to consider for adding to interaction group **880** is user E (the third ranked candidate). However, since user E is already in a group (i.e., interaction group **850**₅), a determination must first be made as to whether adding user E's interaction group **850**₅ to user A's interaction group **880** will exceed interaction group 880's member maximum. Since there are 3 users in group **850**₅ and already 3 users in group **880,** if interaction group 880's member maximum is at least 6, interaction group 8505 may be added to interaction group **880** as depicted in FIG. 8D.

If, however, interaction group **880**'s maximum is less than 6, interaction group **850**₅ will not be added to interaction group **880** and user E may be skipped. In that case, the process would continue to the next ranked user, which is user C. To that end, FIG. 8E depicts interaction group **880** after user E is skipped and user C added. This process may continue until user A's interaction group 880 has reached its member maximum.

With reference back-to-FIGS. 8A-8D, it should be appreciated that each user may have a user-specific matching group. That is, the interaction group 880 discussed above for user A may differ from the interaction group for user B, which will in turn differ from the interaction group for user C, and so on. Moreover, adding user B to user's A group **880** (as in FIG. 8B) will not necessarily mean that user A will be correspondingly added to user B's interaction group.

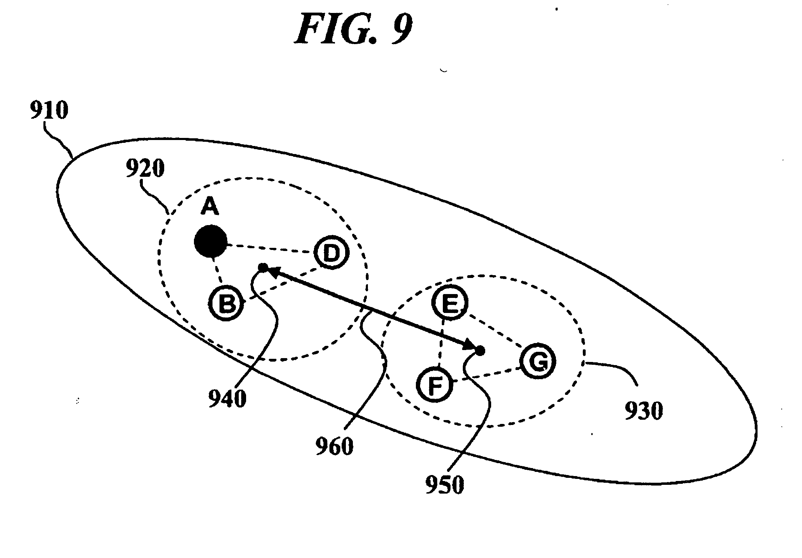

There may be situations which require one or more users in a given interaction group to be removed from the group. For example, a group member may log off and no longer be available, or a group member may move away from the proximity (e.g., outside the radial parameter). Rather than simply removing each group member as he/she travels outside the vicinity, it may be preferable to split an interaction group into two or more subgroups as the various group members drift apart thereby diminishing group member proximity and interaction. To that end, FIG. 9 depicts an interaction group **910** which may be divided into two separate interaction groups **920** and **930.** In one embodiment, the determination as to whether the interaction group **910** should be split is based on identifying the center for each of the possible subgroups. These are denoted as points **940** and **950,** respectively. Thereafter, the distance 960 between the two subgroup centers **940** and **950** may be compared with a predetermined maximum distance. If distance **960** exceeds the predetermined maximum distance, then interaction group **910** may be split into subgroups **920** and **930.** If, on the other hand, distance **960** does not exceed the predetermined maximum distance, then interaction group **910** may not be split. In this manner, interaction groups may be dynamically adjusted to maintain the most optimized level of group member proximity and interaction.

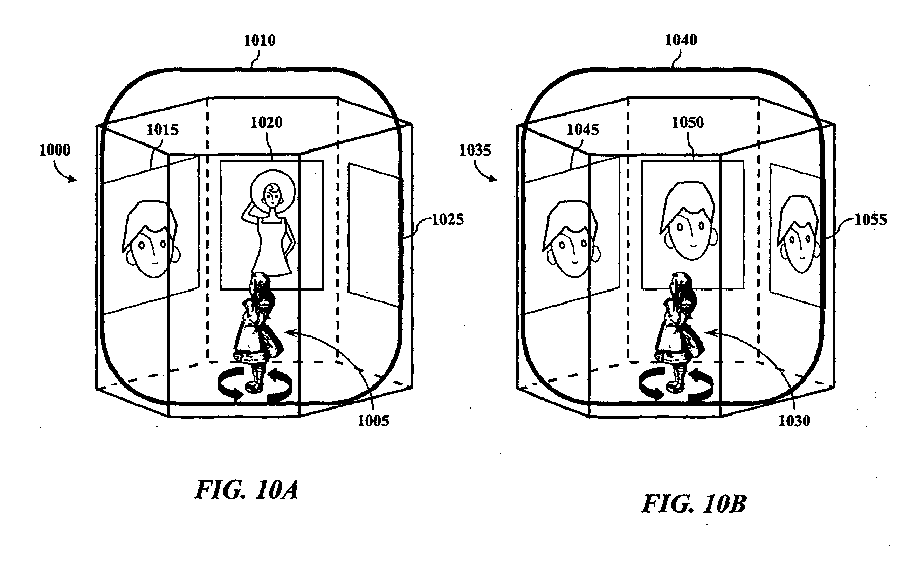

Referring now to FIGS. 10A-10B, illustrated is one embodiment of a chat application in which one or more aspects of the invention may be implemented. In one embodiment, the chat application may be an instantiation of an online environment/community system as described above with reference to FIG. 3.

As shown, a user **1005** may enter a chat room cell 1000 and "look" around the cell using input functions of a user mobile device (e.g., device **310** of FIG. 3). While in the embodiment of FIGS. **10A-10B****,** a 3D environment has been depicted, it may similarly be a 2D environment in another embodiment. In any event, in FIG. 10A a portion of the cell 1000 is visible to the user through the display **1010.** The user 1005 may check the status of nearby users by looking at a panel (or any other graphic/icon) corresponding to the proximately-located users (e.g., users **1015, 1020** and **1025**) using the directional keys of the user device. As illustrated in FIG. 10A, the graphic/icon depicting user **1015** indicates that he/she is available for a chat, while the graphic/icon for user **1020** indicates the chat function has been turned off. Finally, the graphic/icon for user **1025** provides an indication that he/she is busy.

However, it will oftentimes be the case that there will be more available online users than the number of available panels and/or device resources. To that end, FIG. **10B** depicts a situation in which a user **1030** enters a chat room cell 1035 only to find that there are too many available users to be displayed. In this embodiment, the member maximum for user **1030** interaction group is 3-one for each panel. As such, it will be necessary to select the top 3 ranked users to match to user **1030** and hence present in display **1040**. To that end, a proximity search according to user 1030's search parameter radius (e.g., radius **820** of FIG. 8A) may first be performed. As previously mentioned, the search radius may be based on type of user device, the available device resources, user preference data, etc. The resulting candidates may then be ranked as discussed above with reference to FIG. 8A. That is, the candidates may be ranked based on a comparison to one or more matching profile criteria between the user 1030 and the various candidates. In this embodiment, the top three candidates are matched to user **1030,** added to user **1030**'s interaction group and their avatars displayed as users **1045, 1050** and **1055.** In this fashion, user **1030** will now be able to interact with the most optimized set of online users that his/her device is capable of rendering.

While the invention has been described in connection with various embodiments, it should be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method of user matching in an online environment comprising the acts of:
performing a proximity user search based on a predetermined search parameter of a subject user,
identifying a plurality of candidates based on the proximity user search;
ranking the plurality of candidates based on one or more profile matching criteria of the subject user; and
matching, according to said ranking, at least one of the plurality of candidates to the subject user.

2. The method of claim 1, further comprising the act of providing access to the online environment over a network for a resource-limited device of the subject user.

3. The method of claim 1, wherein the predetermined search parameter is representative of a distance within the online environment measured from the subject user.

4. The method of claim 1, wherein the profile matching criteria include one or more of age, gender, interests, habits, personality, inclusion on a block list, inclusion on a buddy list, historical interaction data, physical appearance data and familial data.

5. The method of claim 4, wherein ranking the plurality of candidates comprises comparing one or more profile matching criteria of the subject user to corresponding profile matching criteria for the plurality of candidates.

6. The method of claim 1, wherein matching comprises adding, in accordance with said ranking, at least one of the plurality of candidates to an interaction group of the subject user.

7. The method of claim 6, wherein adding comprises adding, in accordance with said ranking, at least some of the plurality of candidates up to a predetermined member maximum for the interaction group of the subject user.

8. The method of claim 6, further comprising the act of splitting the interactive group into two or more subgroups, each having a center, wherein said splitting is based on a relative distance between said centers.

9. An online environment server comprising:
a network interface configured to connect the server to a wireless network;
a processor electrically coupled to the network interface; and
a memory electrically coupled to the processor, the memory containing processor-executable instructions implementing an online environment, the server configured to:
perform a proximity user search based on a predetermined search parameter of a subject user,
identify a plurality of candidates based on the proximity user search,
rank the plurality of candidates based on one or more profile matching criteria of the subject user, and
match, according to said ranking, at least one of the plurality of candidates to the subject user.

10. The server of claim 9, wherein the subject user accesses said online environment using a resource-limited device.

11. The server of claim 9, wherein the predetermined search parameter is representative of a distance within the online environment measured from the subject user.

12. The server of claim 9, wherein the profile matching criteria include one or more of age, gender, interests, habits, personality, inclusion on a block list, inclusion on a buddy list, historical interaction data, physical appearance data and familial data.

13. The server of claim 12, wherein the plurality of candidates are ranked by comparing one or more profile matching criteria of the subject user to corresponding profile matching criteria for the plurality of candidates.

14. The server of claim 9, wherein the at least one of the plurality of candidates are matched by being added to an interaction group of the subject user.

15. The server of claim 14, wherein the at least one of the plurality of candidates are added to the interaction group up to a predetermined member maximum for the interaction group of the subject user.

16. The server of claim 14, wherein the memory further contains processor-executable instructions to split the interactive group into two or more subgroups, each having a center, based on a relative distance between said centers.

17. A computer program product comprising:
a processor readable medium having processor executable program code embodied therein for user matching in an online environment, the processor executable program code including:
processor executable program code to perform a proximity user search based on a predetermined search parameter of a subject user,
processor executable program code to identify a plurality of candidates based on the proximity user search,
processor executable program code to rank the plurality of candidates based on one or more profile matching criteria of the subject user, and
processor executable program code to match, according to said ranking, at least one of the plurality of candidates to the subject user.

18. The computer program product of claim 17, wherein the processor executable program code further comprises processor executable program code to provide the subject user with access to the online environment over a wireless network using a resource-limited device.

19. The computer program product of claim 17, wherein the predetermined search parameter is representative of a distance within the online environment measured from the subject user.

20. The computer program product of claim 17, wherein the profile matching criteria include one or more of age, gender, interests, habits, personality, inclusion on a block list, inclusion on a buddy list, historical interaction data, physical appearance data and familial data.

21. The computer program product of claim 20, wherein the processor executable program code to rank the plurality of candidates comprises processor executable program code to compare one or more profile matching criteria of the subject user to corresponding profile matching criteria for the plurality of candidates.

22. The computer program product of claim 17, wherein processor executable program code to match comprises processor executable program code to add, in accordance with a candidate ranking, at least one of the plurality of candidates to an interaction group of the subject user.

23. The computer program product of claim 22, wherein the processor executable program code to add comprises processor executable program code to add at least one of the plurality of candidates up to a predetermined member maximum for the interaction group of the subject user.

24. The computer program product of claim 22, further comprising processor executable program code to split the interactive group into two or more subgroups, each having a center, based on a relative distance between said centers.

25. A handheld electronic device operable by a subject user and configured to communicate with an online environment server over a wireless network, the electronic device comprising:
a memory containing processor-executable instructions implementing an online environment application client for accessing an online environment; and
a processor electrically coupled to the memory, the processor configured to execute the application client to:
provide location information to the online environment server representative of a current location within the online environment, wherein the current location is usable to perform a proximity user search, based on a predetermined search parameter, to identify a plurality of candidates in proximity to the subject user, and
receive data representative of an interaction group for the subject user, wherein the interaction group includes at least one of the plurality of candidates that have been matched to the subject user in an order based on one or more profile matching criteria of the subject user.

26. The handheld electronic device 25, wherein the predetermined search parameter is representative of a distance within the online environment measured from the subject user.

27. The handheld electronic device 25, wherein the profile matching criteria include one or more of age, gender, interests, habits, personality, inclusion on a block list, inclusion on a buddy list, historical interaction data, physical appearance data and familial data.

28. The handheld electronic device 26, wherein said ranking comprises a comparison of the one or more profile matching criteria of the subject user to corresponding profile matching criteria for the plurality of candidates.
